# FASCICULE DE BREVET EUROPEEN

(11) **EP 0 707 941 B1**
(45) Date de publication et mention de la délivrance du brevet: **26.09.2001**
(21) Numéro de dépôt: 95402285.1
(22) Date de dépôt: 13.10.1995
(51) Int. Cl.: B29C 53/56, B29D 31/02, F16C 33/64

(54) **Procédé et machine pour l'élaboration de tubes en matériau composite à caractéristiques mécaniques et tribologiques élevées, et tubes obtenus par ledit procédé**
Verfahren und Vorrichtung zum Herstellen von Rohren aus Verbundwerkstoff mit guten mechanischen und tribologischen Eigenschaften, und durch das Verfahren hergestellte Rohre
Method and apparatus for making composite pipes with high mechanical and tribologic characteristics, and pipes obtained by said process

(30) Priorité: 21.10.1994 FR 9412587
(43) Date de publication de la demande: 24.04.1996
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Wölki, Peter, D-41187 Mömchengladbach (DE); Edeline, Emmanuel, F-27630 Ecos (FR); Cretegny, Jean-François, F-78160 Marly le Roi (FR)
(74) Mandataire: Thévenet, Jean-Bruno

(56) Documents cités:
- DE-A- 3 442 558
- DE-A- 4 217 319
- FR-A- 1 566 406
- FR-A- 2 632 244
- FR-A- 2 711 090
- GB-A- 2 081 207
- US-A- 3 870 589

## Description

La présente invention concerne un procédé pour l'élaboration de tubes en matériau composite présentant des caractéristiques mécaniques et tribologiques élevées notamment un coefficient de frottement réduit et particulièrement destiné à la fabrication de paliers annulaires et de cages de roulement pouvant être utilisés aux basses températures (par exemple de 20 à 600 K). Elle concerne également la machine destinée à la mise en oeuvre de ce procédé et le matériau ainsi obtenu.

Actuellement, les matériaux utilisés pour la réalisation de cages de roulement ne donnent pas entièrement satisfaction, notamment en ambiance cryogénique, et présentent encore de nombreux inconvénients liés d'une part aux problèmes mécaniques survenant à des vitesses de rotation élevées et susceptibles d'entraîner la rupture de la cage et d'autre part aux frottements qui existent entre la cage et les billes, rouleaux ou aiguilles qu'elle renferme et qui sont de nature à créer un échauffement préjudiciable du roulement.

Une solution partielle à ces difficultés est apportée aujourd'hui par le recours à des matériaux composites à base de fibre de verre et de PTFE qui permettent notamment un fonctionnement à des vitesses de rotation élevées et dont la fabrication repose principalement sur les deux procédés classiques que sont l'injection et l'enroulement.

Le premier procédé présente l'inconvénient majeur de ne pas permettre d'obtenir de bonnes caractéristiques mécaniques, son avantage étant cependant de faciliter l'ajout d'additifs quelconques de nature à assurer au matériau issu de ce procédé des propriétés spécifiques.

Le second procédé qui consiste à appliquer un fil sur un mandrin animé d'un mouvement de rotation permet d'obtenir des caractéristiques mécaniques qui, du fait de l'orientation des fibres, sont bonnes dans une direction circonférentielle mais sont, au contraire, faibles dans une direction longitudinale, ce qui a pour conséquence de limiter la résistance à la traction des paliers réalisés par ce procédé. La faiblesse de ce type d'enroulement persiste même en adoptant un croisement des fils (principe de l'enroulement hélicoïdal) selon un angle optimum proche de 50°. En outre, les matériaux obtenus par ce procédé sont affectés d'un coefficient de frottement très aléatoire, dépendant notamment du sens d'enroulement des différentes fibres, ce qui affecte la longévité comme la stabilité des cages ou paliers réalisés avec ce matériau. De plus, il n'est pas inutile de noter que la présence de fibres de verre confère à ce matériau des propriétés abrasives qui ne sont pas sans présenter certains inconvénients.

Ce procédé de simple enroulement appliqué à des nappes de tissu s'il permet d'obtenir de bonnes caractéristiques mécaniques dans les directions axiales et circonférentielles, ne permet pas d'obtenir des caractétistiques tribologique de frottement et de résistance à l'usure suffisante, puisqu'il interdit l'introduction de matériaux lubrifiants, non "imprégnables", en volume important.

On connaît aussi par le document DE 3 442 558 un procédé de fabrication de tubes par l'enroulement combiné d'un tissu de fibres imprégnés par un polymère avec un autre matériau lui-même imprégné de ce polymère.

La présente invention se propose donc de fabriquer un matériau possédant d'une part des caractéristiques élevées à la fois dans les directions circonférentielle et longitudinale, et d'autre part des caractéristiques tribologiques de frottement et de résistance à l'usure très importantes, ce que ne permettent pas les procédés actuels.

Ce but est atteint par un procédé de fabrication selon la revendication 1.

Ce procédé entièrement nouveau et original d'enroulement simultané sur un même mandrin, ou double enroulement, d'un tissu de fibres renfort et d'une feuille de matériau matrice autorise l'association de matériaux non miscibles par le procédé classique de mono-enroulement. Il permet d'obtenir des matériaux composites ayant une structure bi-dimensionnelle qui présente des caractéristiques mécaniques élevées. Dans une variante de réalisation particulière, le mandrin peut constituer une préforme pour le matériau composite dont il est alors une partie intégrante.

Le tissu de fibres renfort comporte une structure tissée de fibres nues imprégnées d'un polymère, le polymère étant de préférence ajouté par préimprégnation. Ces fibres peuvent être constituées par des fibres de carbone, de polyparaphenylèneterephtalamide connu sous la dénomination "kevlar", de verre, de bronze ou un mélange de ces fibres. De préférence, le polymère comprend du PTFE ou du PTFCE. ou tout autre thermodurcissable.

La feuille de matériau matrice comporte le polymère et de préférence au moins un additif destiné à améliorer les caractéristiques tribologiques et de conductibilité thermique du matériau. Cet additif peut être avantageusement constitué par un bisulfure de molybdène (MoS2), un carbure de silicium (SiC), un graphite, de l'argent ou du plomb.

Le procédé selon l'invention permet d'obtenir des rapports de composition renfort/matrice/additifs dans de larges plages et ainsi des caractéristiques notamment tribologiques particulièrement intéressantes, comme une excellente résistance à l'usure ou un coefficient de frottement réduit.

Avantageusement, le refroidissement du mandrin est réalisé par une circulation d'air et, de préférence, pour éviter tout tranfert entre le polymère et les moyens de chauffage, ceux-ci sont réalisés sans contact par chauffage infrarouge autour d'une zone de soudage entre le tissu renfort et la feuille de matériau matrice. Toutefois, le chauffage du matériau composite peut être renforcé par un chauffage préalable du tissu de fibres renfort et/ou de la feuille de matériau matrice en amont de la zone de soudage. De préférence, cette zone de soudage s'étend sur un angle de 45°.

Afin d'obtenir une adhérence maximale entre les strates successives formant le matériau composite, le mandrin est préchauffé dans un four avant toute utilisation.

Dans une variante de mise en oeuvre du procédé, le préchauffage du mandrin est réalisé directement à partir des moyens de chauffage infrarouge, ce qui évite ainsi l'emploi d'un four annexe mais nécessite alors une interruption de la rotation du mandrin pour la fixation des tissu et feuille.

La présente invention concerne également une machine pour la fabrication d'un matériau composite sous la forme d'un tube annulaire par enroulement simultané sur un mandrin d'un tissu de fibres renfort comprenant une structure tissée de fibres nues imprégnées d'un polymère et d'une feuille de matériau matrice comportant au moins ce polymère, machine comprenant une structure porteuse munie de deux montants entre lesquels le mandrin est placé, des moyens d'entraînement pour entraîner en rotation le mandrin, des moyens de fixation conjointe du tissu de fibres renfort et de la feuille de matériau matrice sur le mandrin, des moyens de tension de ces tissu et feuille pendant leur enroulement simultané autour du mandrin, des moyens de chauffage du matériau composite disposés dans une zone de soudage entre le tissu de fibres renfort et la feuille de matériau matrice et des moyens de refroidissement du mandrin par un fluide de refroidissement. Avantageusement, les moyens de chauffage sont réalisés par un dispositif sans contact à infrarouge.

De préférence, le mandrin comporte sur sensiblement toute sa longueur une fente pour recevoir les extrémités libres du tissu de fibres renfort et de la feuille de matériau matrice. La fixation sur le mandrin se fera alors naturellement après un ou deux tours de rotation à partir desquels les tissu et feuille seront soumis à leur tension nominale de fonctionnement. En outre, les moyens de refroidissement comportent de préférence des canaux percés dans le mandrin pour permettre la circulation du fluide de refroidissement.

De préférence, les moyens de chauffage se déplacent en fonction de l'accroissement du diamètre du tube de matériau composite par l'intermédiaire d'un ensemble pantographique, de telle sorte que la distance entre ces moyens de chauffage et le tube reste constante.

L'adhérence entre les strates successives du matériau composite peut être accrue par le recours à des moyens de préchauffage disposés en amont de la zone de soudage et éventuellement par l'emploi d'un dispositif presseur disposé en aval de la zone de soudage.

Enfin, l'invention se rapporte à un matériau composite réalisé sur la base d'un enroulement simultané, sur la machine précitée et selon le procédé précédemment décrit, d'un tissu de fibres renfort constitué de fibres nues imprégnées d'un polymère et d'une feuille de matériau matrice constituée de ce polymère et chargée d'un additif déterminé. De préférence, ces fibres sont choisies parmi les fibres du groupe comprenant des fibres de carbone, de "kevlar", de verre, de bronze ou d'un mélange de ces fibres, le polymère comporte du PTFE ou du PTFCE ou tout autre thermodurcissable et l'additif est choisi parmi l'un des produits du groupe comprenant le bisulfure de molybdène, le carbure de silicium, le graphite, l'argent et le plomb.

D'autres caractéristiques et avantages de la présente invention ressortiront mieux de la description suivante, faite à titre indicatif et non limitatif, en regard des dessins annexés, sur lesquels:
- la figure 1 montre schématiquement le processus de fabrication d'un matériau composite selon l'invention,
- la figure 2 représente le mandrin utilisé dans le processus de l'invention,
- la figure 3 est une vue extérieure de la machine sur laquelle est mis en oeuvre le procédé de fabrication selon l'invention, et

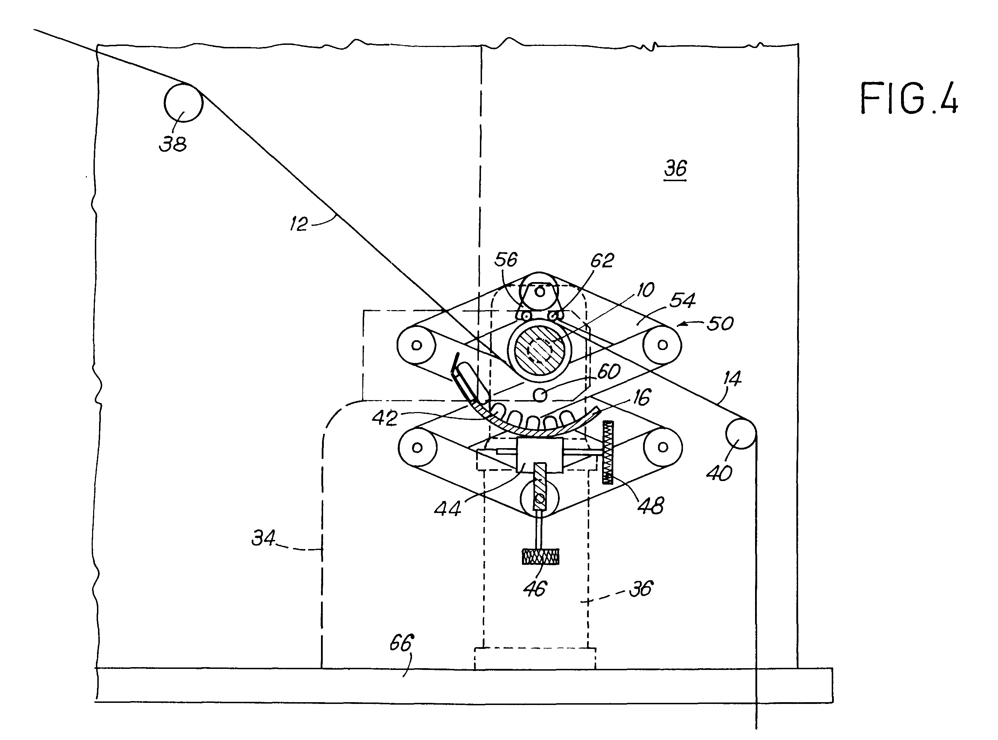

- la figure 4 est une coupe selon l'axe IV-IV de la figure 3.

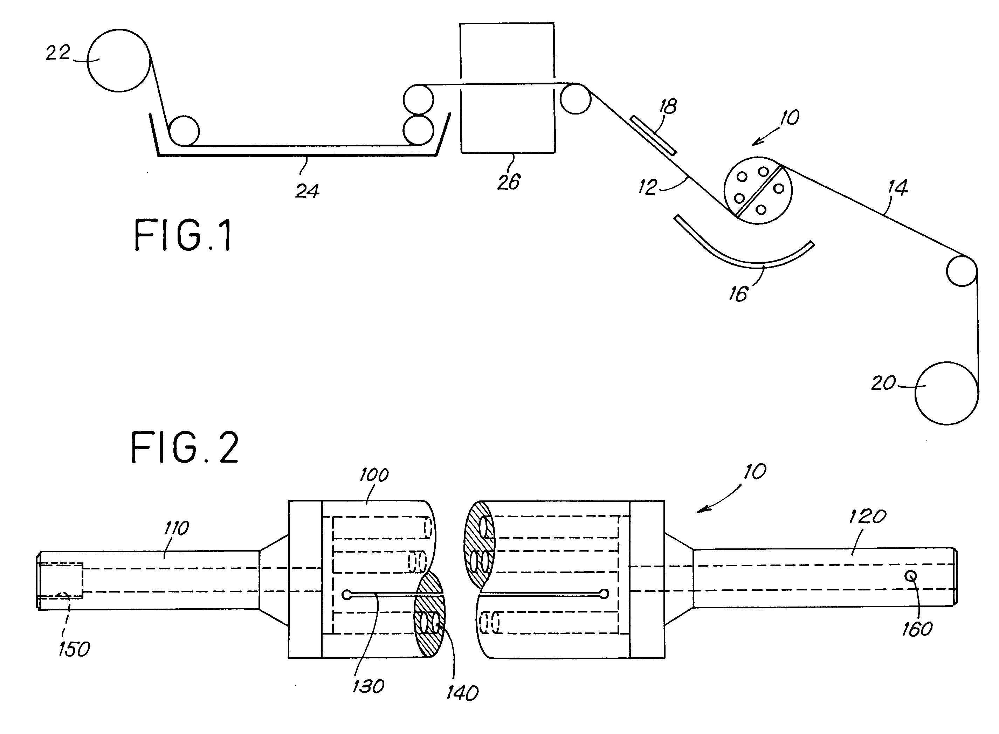

Les paliers ou cages de roulement et autres produits analogues (joints, coussinets ou inserts par exemple) sont obtenus après découpe d'un tube en matériau composite dont le processus de fabrication selon l'invention est visualisé de façon très schématique à la figure 1. Il est organisé autour d'un mandrin 10 sur lequel sont enroulés d'une part une première bande 12, d'une largeur sensiblement égale à la longueur de ce mandrin, constituée d'un tissu renfort de fibres de carbone, "kevlar", verre, bronze ou un mélange de ces fibres qui a fait l'objet préalablement d'une imprégnation par un polymère comme le PTFE par exemple et d'autre part une seconde bande 14, de même largeur, constituée d'une feuille d'un matériau matrice formée d'un polymère tel que le PTFE ou le PTFCE qui peut être chargé d'additifs anti-usure, de lubrifiants ou tout autre produit de nature à améliorer les propriétés du matériau par exemple sa conductibilité thermique. Lors de l'enroulement simultané du tissu renfort et de la feuille de matériau matrice, et éventuellement préalablement à celui-ci, les tissu 12 et feuille 14 sont chauffés par des moyens de chauffage sans contact 16, 18 à infrarouges alors que dans le même temps le mandrin 10 est refroidi. La longueur d'onde de chauffage est déterminée de telle sorte qu'elle présente la meilleure absorption vis à vis du polymère choisi.

Les opérations permettant l'obtention du tissu renfort et de la feuille de matériau matrice relèvent de procédés classiques. Ainsi, la feuille de matériau matrice peut être réalisée à partir d'une plaque obtenue par frittage à partir de poudre et laminée à chaud, qui est ensuite enroulée sur un premier cylindre 20 duquel elle peut ensuite être débitée pour être mise en oeuvre par le procédé selon l'invention qui sera décrit dans le détail plus avant. Les poudres utilisées sont de type polymère et peuvent être chargées de divers additifs, dispersés également sous forme de poudre.

De même, le tissu renfort peut être obtenu après imprégnation d'un tissu de fibre nu débité d'un second cylindre 22 dans un bassin 24 dans lequel est placée en solution une suspension du polymère considéré par exemple du PTFE. Un passage dans un four 26 permet ensuite l'évaporation nécessaire à l'obtention d'un tissu 12.

Un autre mode de réalisation de ce tissu renfort consiste en une préenduction du tissu dans une tour d'enduction en plusieurs passages. Dans ce cas, cette opération ne peut être consécutive à l'enroulement mais permet l'enduction d'une grande largeur de tissu, lequel devra ensuite être découpé pour pouvoir être enroulé.

Ces opérations d'imprégnation sont destinées à préparer la liaison fibre renfort/matrice par un apport limité et déterminé du matériau matrice.

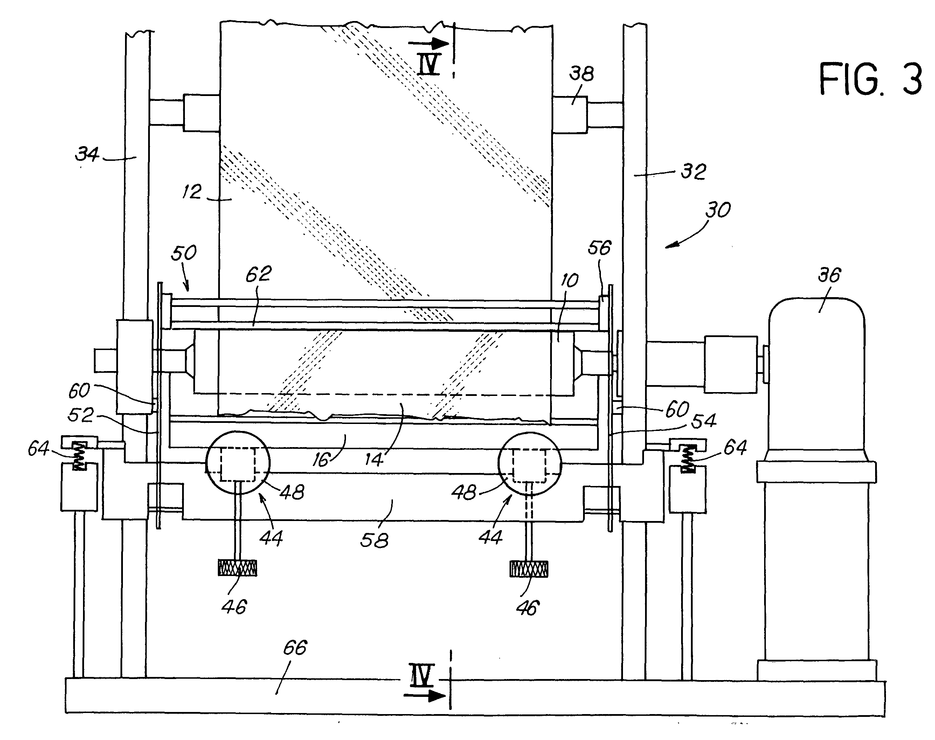

La figure 2 montre dans le détail la structure du mandrin de la figure 1 permettant l'enroulement simultané du tissu renfort et de la feuille matrice. Ce mandrin 10 comporte un corps cylindrique 100 (sans que cette forme soit limitative, une forme oblongue, multilobée ou polygonale étant tout aussi envisageable) avec des première et seconde extrémités 110, 120. Le corps 100 est traversé de part en part sur une plus grande partie de sa longueur par une fente 130 destinée à recevoir les extrémités libres du tissu renfort et de la feuille de matériau matrice pour assurer leur fixation au mandrin. Cette solution de fixation des tissu et feuille sur le mandrin n'est bien sûr pas la seule envisageable même si elle est préférée. En effet, une solution par vissage de secteurs rapportés peut être également mise en oeuvre. Des canaux 140 sont percés dans ce mandrin parallèlement à son axe de rotation pour assurer son refroidissement par le passage d'un fluide de refroidissement, avantageusement de l'air mais une circulation d'eau ou de tout autre liquide est également possible, qui circule à partir d'un orifice d'entrée 150 pratiqué à une extrémité, par exemple 110, de ce mandrin et s'écoule vers un orifice de sortie 160 pratiqué dans son autre extrémité. L'entraînement en rotation de ce mandrin peut être assuré par tous moyens, notamment électriques comme représenté sur la figure 3 qui montre une machine particulièrement adaptée à la réalisation de tubes en composite par double enroulement selon le procédé de l'invention.

Cette machine est constituée principalement d'une structure porteuse 30 à deux montants 32, 34 dans lesquels viennent s'encastrer les deux extrémités du mandrin 10 qui est entraîné en rotation à vitesse constante, à une de ses extrémités, par un ensemble moteur 36 (le dispositif d'admission du liquide ou gaz de refroidissement, non représenté, étant alors avantageusement placé au niveau de l'autre extrémité du mandrin). Afin d'assurer la nécessaire mise en température du matériau composite dans la zone de soudage où se réalise la liaison fibre renfort/matrice, les moyens de chauffage sans contact 16 à température constante (mais un chauffage par résistance et contact peut aussi être retenu), sont constitués par un ou plusieurs tubes infrarouges 42 disposés sur toute la longueur du mandrin 10. Ce dispositif de chauffage repose sur des supports 44 réglables en hauteur et en profondeur, par exemple au moyen d'ensembles vis-bouton moleté 46, 48. Des rouleaux de tension disposés entre les montants, par exemple 38, 40, ou tout autre dispositif analogue, permettent de maintenir une tension constante sur le tissu renfort et la feuille de matériau matrice afin de garantir une pression suffisante entre les différentes strates du matériau composite. Il peut être noté que cette tension peut également être obtenue en agissant par freinage, notamment electromagnétique, sur les cylindres débitants 20, 22. En complément, un dispositif presseur, peut agir en sortie de la zone de soudage pour amplifier cette pression inter-strates et accessoirement jouer un rôle de refroidisseur.

Dans une réalisation avantageuse permettant un parfait suivi de l'évolution du diamètre du tube à fabriquer, ces supports peuvent être déplacés par un ensemble pantographique 50. Cet ensemble comporte deux bras 52, 54 disposés dans un plan perpendiculaire à l'axe longitudinal du mandrin 10 sensiblement au niveau de ses deux extrémités et constitués par des tiges articulées autour d'un point fixe 60 solidaire des montants 32, 34. La partie supérieure de chacun de ces bras est reliée à un dispositif palpeur 56, leur partie inférieure étant en appui sur un dispositif de maintien élastique 58 des supports 44 des moyens de chauffage 16. Ce dispositif palpeur comporte avantageusement au moins une barre 62 reposant sur toute la longueur du mandrin et dont le déplacement avec l'augmentation du diamètre du tube provoque un déplacement en sens opposé (par rapport au point fixe 60) de la partie inférieure des bras, entraînant un abaissement automatique du dispositif de maintien 58 (et donc des supports 44) sur lequel reposent les bras et qui est relié par des moyens élastiques 64 au socle 66 supportant la structure porteuse de la machine. Par ce recours à un tel ensemble pantographique, il est possible de garantir qu'une distance constante soit maintenue entre les moyens de chauffage et la surface du tube quel que soit son diamètre. Ainsi, le flux rayonné par unité de surface est sensiblement constant et l'adhérence inter-strates comme l'uniformité du matériau composite est améliorée.

Le procédé de fabrication mis en oeuvre dans la machine précédemment décrite et qui repose sur la réalisation d'un tube de ce matériau par un enroulement simultané (double enroulement) d'un tissu de fibres renfort et d'une feuille de matériau matrice présentant une largeur sensiblement égale à la longueur du mandrin, ces produits ayant été préalablement obtenus par des procédés traditionnels, comporte les étapes suivantes:
1) préchauffage du mandrin jusqu'à une valeur prédéterminée,
2) fixation du tissu de fibres renfort et de la feuille de matériau matrice sur le mandrin,
3) mise en rotation du mandrin à une valeur nominale, le tissu et la feuille étant soumis à une tension déterminée inférieure à une tension nominale,
4) actionnement des moyens de chauffage du matériau et des moyens de refroidissement du mandrin,
5) après un nombre de rotations du mandrin déterminé, mise sous tension nominale du tissu et de la feuille,
6) lorsque le diamètre désiré du tube est atteint, arrêt des moyens de chauffage et de la rotation du mandrin,
7) après une durée déterminée suffisante pour ramener la température du mandrin à la valeur prédéterminée de préchauffage, arrêt des moyens de refroidissement,
8) démontage du mandrin et éventuellement extraction du tube.

L'étape de préchauffage du mandrin qui est indispensable pour assurer une bonne adhérence inter-strates peut-être réalisée de manière indépendante dans un four ou directement sur la machine en utilisant les moyens de chauffage. Dans ce dernier cas, il est alors nécessaire d'interrompre quelques instants ce chauffage pour procéder à la fixation des tissu et feuille sur le mandrin. Cette adhérence peut encore être améliorée, notamment pour les tubes de grands diamètres et avec certaines fibres particulières comme le bronze par exemple, en procédant à un préchauffage (par les moyens 18) du tissu de fibres renfort en amont de la zone de soudage. Il peut être noté que ce préchauffage peut aussi concerner la feuille de matériau matrice. L'application d'une tension réduite, par exemple à 10 % de sa valeur nominale, sur ces produits lors des premières rotations du mandrin, en pratique les 2 ou 3 premiers tours, permet d'éviter qu'ils ne sortent de la fente du mandrin dans laquelle ils ont été placés dans l'étape précédente de fixation. Toutefois, dans le cas où cette fixation est réalisée différemment, notamment par vissage, il peut être noté que cette précaution n'est alors pas nécessaire et la tension nominale peut être appliquée dès la première rotation au tissu de renfort comme à la feuille de matériau matrice, l'étape 5) devenant alors sans objet.

L'extraction du tube du mandrin provoque le cisaillement des extrémités des tissu et feuille introduites dans la fente de fixation et il est alors nécessaire de procéder à un usinage interne du tube de matériau composite avant sa découpe en vue de son utilisation. Il peut toutefois être noté que cette extraction peut ne pas être mise en oeuvre dans le cas ou le mandrin constitue une préforme faisant partie intégrante du matériau final.

Différents essais ont été menés en vue de réaliser par le procédé décrit précédemment un matériau composite présentant des caractéristiques mécaniques et tribologiques élevées avec un ratio volumique matrice/fibre renfort de 6 et des densités faibles. Il a ainsi pu être observé des limites en traction circonférentielle et axiale supérieures à 140 Pa pour un tube fibre de verre à 40 % et PTFE à 60%, cette limite étant repoussée à 200 Pa pour un tube fibre de carbone à 15% et PTFE à 85 %. Pour ce dernier type de matériau, les coefficients de frottement parallèle et orthogonal (vis à vis des fibres) sur un acier inoxydable sont respectivement inférieur à 0.05 et à 0.15.

Avec le procédé selon l'invention, il est possible d'obtenir un matériau présentant un taux de fibres renfort très faible de l'ordre de 10 % et donc corrélativement d'atteindre des taux de polymère proche de 90 %. Les rapports de composition renfort/matrice/additifs peuvent être modifiés dans de larges plages autorisant une optimisation du matériau. De plus, et surtout, ce procédé de double enroulement permet l'association de matériaux a priori non miscibles avec le tissu de fibres renfort comme le plomb, l'argent, le graphite ou le bisulfure de molybdène (MoS2), mais qui au contraire peuvent être intégrés très facilement à une matrice de PTFE.

Les conditions de réalisation d'un matériau composite à matrice de PTFE chargée de MoS2 et à renfort de fibres de carbone imprégnées de PTFE sont les suivantes:
. préchauffage du mandrin jusqu'à environ 200°C
. vitesse de rotation du mandrin de 0.1 à 0.5 tour/minute selon le diamètre du tube
. tension du tissu renfort de 50 à 200 Newtons/cm
. tension de la feuille matrice de 1 à 10 Newtons/cm
. température de chauffage environ 700°C (pour une température en surface du tube supérieure à 380 °C)
. et zone angulaire de chauffage d'environ 45°.
La température en surface du tube doit être suffisante pour provoquer la fusion du polymère mais pas trop élevée pour éviter sa dégradation et la tension du tissu renfort ne doit pas excéder la limite imposée par la tenue mécanique de la fibre, notamment dans la zone de soudage.

De par ses caractéristiques exceptionnelles mécaniques et tribologiques, le matériau résultant du procédé d'obtention par double enroulement de tubes selon l'invention est particulièrement adapté à la réalisation de cages de roulement fonctionnant à basse température ou de cages ne pouvant être lubrifiées comme des cages de gyroscopes. Ce matériau est aussi susceptible d'application, sans que ce domaine soit limitatif, dans les atterrisseurs de machines industrielles à paliers magnétiques actifs.

## Revendications

1. Procédé de fabrication d'un matériau composite sous la forme d'un tube annulaire, par enroulement sur un mandrin (10) à partir d'un tissu de fibres renfort (12) comprenant une structure tissée de fibres nues imprégnées d'un polymère et d'une feuille de matériau matrice (14) comportant au moins le polymère, le tissu de fibres renfort et la feuille de matériau matrice étant disponibles sur des rouleaux débitants (20,22), procédé comportant les étapes suivantes:
1) préchauffage du mandrin (10) jusqu'à une valeur prédéterminée,
2) fixation du tissu de fibres renfort (12) et de la feuille de matériau matrice (14) sur le mandrin (10),
3) mise en rotation du mandrin (10) à une valeur nominale pour assurer un enroulement simultané du tissu et de la feuille maintenus à une tension nominale,
4) actionnement de moyens de chauffage du matériau composite ainsi obtenu (16) et de moyens de refroidissement du mandrin (140, 150, 160),
5) lorsque le diamètre désiré du tube est atteint, arrêt des moyens de chauffage et de la rotation du mandrin,
6) après une durée déterminée, suffisante pour ramener la température du mandrin à la valeur prédéterminée de préchauffage, arrêt des moyens de refroidissement,
7) démontage du mandrin (10).

2. Procédé selon la revendication 1, **caractérisé en ce que** pendant un nombre de rotations du mandrin déterminé, le tissu de fibres renfort (12) et la feuille de matériau matrice (14) sont soumises à une tension inférieure à leur tension nominale de fonctionnement.

3. Procédé selon la revendication 1 ou la revendication 2, **caractérisé en ce que** le mandrin (10) constitue une préforme pour le matériau composite.

4. Procédé selon la revendication 1, **caractérisé en ce que** le tissu de fibres renfort (12) comporte une structure tissée de fibres nues et un polymère ajouté par préimprégnation (24).

5. Procédé selon la revendication 4, **caractérisé en ce que** ces fibres sont constituées par l'une des fibres du groupe comprenant des fibres de carbone, de polyparaphenylèneterephtalamide ou "kevlar", de verre, de bronze ou un mélange de ces fibres.

6. Procédé selon la revendication 4, **caractérisé en ce que** le polymère comprend du PTFE, du PTFCE, ou tout autre thermodurcissable.

7. Procédé selon la revendication 4, **caractérisé en ce que** la feuille de matériau matrice comporte ledit polymère et au moins un additif destiné à améliorer les caractéristiques tribologiques du matériau.

8. Procédé selon la revendication 7, **caractérisé en ce que** l'additif est constitué par l'un des produits du groupe comprenant le bisulfure de molybdène (MoS2), le carbure de silicium (SiC), le graphite, l'argent ou le plomb.

9. Procédé selon la revendication 1, **caractérisé en ce que** la mise en rotation du mandrin est réalisée à une vitesse constante comprise entre 0.1 et 0.5 tr/mn.

10. Procédé selon la revendication 1, **caractérisé en ce que** la tension nominale du tissu de fibres renfort (12) est comprise entre 50 et 200N/cm.

11. Procédé selon la revendication 1, **caractérisé en ce que** la tension nominale de la feuille de matériau matrice (14) est comprise entre 1 et 10N/cm.

12. Procédé selon la revendication 10 ou la revendication 11, **caractérisé en ce que** lesdites tensions nominales sont obtenues par un freinage des rouleaux débitants (20,22) qui débitent le tissu de fibres renfort et la feuille de matériau matrice.

13. Procédé selon la revendication 1, **caractérisé en ce que** le refroidissement du mandrin est réalisé par une circulation d'air.

14. Procédé selon la revendication 1, **caractérisé en ce que** le chauffage du matériau composite est réalisé sans contact par chauffage infrarouge (16) autour d'une zone de soudage du tissu renfort avec la feuille de matériau matrice.

15. Procédé selon la revendication 14, **caractérisé en ce que** le chauffage du matériau composite est renforcé par un chauffage préalable du tissu de fibres renfort et/ou de la feuille de matériau matrice en amont (18) de la zone de soudage.

16. Procédé selon la revendication 14, **caractérisé en ce que** la zone de soudage s'étend sur un angle de 45°.

17. Procédé selon la revendication 14, **caractérisé en ce que** le préchauffage du mandrin est réalisé directement à partir des moyens de chauffage infrarouge.

18. Procédé selon la revendication 1, **caractérisé en ce que** le préchauffage du mandrin est réalisé dans un four.

19. Machine pour la fabrication d'un matériau composite, sous la forme d'un tube annulaire, par enroulement simultané sur un mandrin (10), d'un tissu de fibres renfort (12) comprenant une structure tissée de fibres nues imprégnées d'un polymère et d'une feuille de matériau matrice (14) comportant au moins ce polymère, machine comprenant une structure porteuse (30) munie de deux montants (32, 34) entre lesquels le mandrin est placé ; des moyens d'entraînement (36), pour entraîner en rotation le mandrin ; des moyens (130) de fixation conjointe sur le mandrin du tissu de fibres renfort et de la feuille de matériau matrice ; des moyens de tension (20, 22) de ces tissu et feuille pendant leur enroulement simultané autour du mandrin ; des moyens de chauffage (16) du matériau composite ainsi obtenu disposés dans une zone de soudage du tissu de fibres renfort avec la feuille de matériau matrice ; et des moyens de refroidissement (140, 150, 160) du mandrin par un fluide de refroidissement.

20. Machine selon la revendication 19, **caractérisée en ce que** les moyens de chauffage sont réalisés par un dispositif sans contact à infrarouge (42).

21. Machine selon la revendication 19, **caractérisée en ce que** le mandrin comporte sur sensiblement toute sa longueur une fente (130) pour recevoir les extrémités libres du tissu de fibres renfort et de la feuille de matériau matrice.

22. Machine selon la revendication 19, **caractérisée en ce que** les moyens de refroidissement comportent des canaux (140) percés dans le mandrin pour permettre la circulation du fluide de refroidissement.

23. Machine selon la revendication 19, **caractérisée en ce que** le mandrin constitue une préforme pour le matériau composite.

24. Machine selon la revendication 19, **caractérisée en ce que** les moyens de chauffage se déplacent en fonction de l'accroissement du diamètre du tube de matériau composite par l'intermédiaire d'un ensemble pantographique (50) de telle sorte que la distance entre ces moyens de chauffage et le tube reste constante.

25. Machine selon la revendication 19, **caractérisée en ce qu'**elle comporte en outre des moyens de préchauffage (18) disposés en amont de la zone de soudage.

26. Machine selon la revendication 19, **caractérisée en ce qu'**elle comporte en outre un dispositif presseur disposé en aval de la zone de soudage et destiné à améliorer la pression entre les strates successives du matériau.

27. Matériau composite à structure annulaire obtenu selon le procédé des revendications 1 à 18.

28. Matériau composite selon la revendication 27, **caractérisé en ce que** ces fibres sont choisis parmi l'une des fibres du groupe comprenant des fibres de carbone, de polyparaphenylèneterephtalamide ou "kevlar", de verre, de bronze ou d'un mélange de ces fibres.

29. Matériau composite selon la revendication 27, **caractérisé en ce que** le polymère comporte du PTFE ou du PTFCE ou tout autre thermodurcissable.

30. Matériau composite selon la revendication 27, **caractérisé en ce que** l'additif est choisi parmi l'un des produits du groupe comprenant le bisulfure de molybdène, le carbure de silicium, le graphite, l'argent et le plomb.

## Patentansprüche

1. Verfahren zur Herstellung eines Verbundmaterials in der Form eines ringförmigen Rohrs durch Aufwickeln auf einen Kern (10), ausgehend von einem Verstärkungsfasergewebe (12), das ein gewebtes Gefüge aus blanken, mit einem Polymer imprägnierten Fasern aufweist, und von einem Flachmaterial aus Matrixmaterial (14), das mindestens das Polymer enthält, wobei das Verstärkungsfasergewebe und das Flachmaterial aus Matrixmaterial auf Zuführrollen (20, 22) verfügbar sind, wobei das Verfahren die folgenden Schritte aufweist:
1) Vorwärmen des Kerns (10) bis auf einen vorbestimmten Wert,
2) Befestigung des Verstärkungsfasergewebes (12) und des Flachmaterials aus Matrixmaterial (14) auf dem Kern (10),
3) in Drehbewegung Versetzen des Kerns (10) bis zu einem Nennwert, um ein gleichzeitiges Aufwickeln des Gewebes und des Flachmaterials, die unter einer Nennspannung gehalten werden, sicherzustellen,
4) Betätigung von Mitteln zum Erwärmen des so erhaltenen Verbundmaterials (16) und von Mitteln zum Kühlen des Kerns (140, 150, 160),
5) wenn der gewünschte Durchmesser des Rohrs erreicht ist, Abstellen der Mittel zum Erwärmen und der Drehung des Kerns,
6) nach einer vorbestimmten Dauer, die ausreichend ist, um die Temperatur des Kerns auf den vorbestimmten Vorwärmwert zu bringen, Abstellen der Mittel zum Kühlen,
7) Abbau des Kerns (10).

2. Verfahren nach Anspruch 1, **dadurch gekennzeichnet, dass** während einer bestimmten Anzahl von Drehungen des Kerns das Verstärkungsfasergewebe (12) und das Flachmaterial aus Matrixmaterial (14) einer Spannung ausgesetzt werden, die kleiner ist als ihre nominelle Betriebsspannung.

3. Verfahren nach Anspruch 1 oder 2, **dadurch gekennzeichnet, dass** der Kern (10) für das Verbundmaterial eine Vorform darstellt.

4. Verfahren nach Anspruch 1, **dadurch gekennzeichnet, dass** das Verstärkungsfasergewebe (12) ein gewebtes Gefüge blanker Fasern und ein durch Vorimprägnierung (24) zugefügtes Polymer aufweist.

5. Verfahren nach Anspruch 4, **dadurch gekennzeichnet, dass** die Fasern bestehen aus einer der Fasern der Gruppe, die Fasern aus Kohlenstoff, aus Polyparaphenylenterephthalamid oder "Kevlar", aus Glas, aus Bronze oder aus einem Gemisch dieser Fasern aufweist.

6. Verfahren nach Anspruch 4, **dadurch gekennzeichnet, dass** das Polymer PTFE, PCTFE oder irgendein anderes wärmehärtbares Polymer aufweist.

7. Verfahren nach Anspruch 4, **dadurch gekennzeichnet, dass** das Flachmaterial aus Matrixmaterial das Polymer und mindestens einen Zusatzstoff, der dazu geeignet ist, die tribologischen Eigenschaften des Materials zu verbessern, enthält.

8. Verfahren nach Anspruch 7, **dadurch gekennzeichnet, dass** der Zusatzstoff aus einem der Produkte der Gruppe, die Molybdändisulfid (MoS₂), Siliciumcarbid (SiC), Graphit, Silber oder Blei aufweist, besteht.

9. Verfahren nach Anspruch 1, **dadurch gekennzeichnet, dass** das in Drehbewegung Versetzen des Kerns mit einer konstanten Geschwindigkeit durchgeführt wird, die zwischen 0,1 und 0,5 Umdrehungen/Minute liegt.

10. Verfahren nach Anspruch 1, **dadurch gekennzeichnet, dass** die Nennspannung des Verstärkungsfasergewebes (12) zwischen 50 und 200 N/cm liegt.

11. Verfahren nach Anspruch 1, **dadurch gekennzeichnet, dass** die Nennspannung des Flachmaterials aus Matrixmaterial (14) zwischen 1 und 10 N/cm liegt.

12. Verfahren nach Anspruch 10 oder 11, **dadurch gekennzeichnet, dass** die Nennspannungen erhalten werden durch ein Bremsen der Zuführrollen (20, 22), die das Verstärkungsfasergewebe und das Flachmaterial aus Matrixmaterial zuführen.

13. Verfahren nach Anspruch 1, **dadurch gekennzeichnet, dass** das Kühlen des Kerns durch eine Luftzirkulation durchgeführt wird.

14. Verfahren nach Anspruch 1, **dadurch gekennzeichnet, dass** das Erwärmen des Verbundmaterials berührungslos durch Infrarotheizung (16) um einen Verschweißungsbereich des Verstärkungsgewebes mit dem Flachmaterial aus Matrixmaterial herum durchgeführt wird.

15. Verfahren nach Anspruch 14, **dadurch gekennzeichnet, dass** das Erwärmen des Verbundmaterials verstärkt wird durch ein vorheriges Erwärmen des Verstärkungsfasergewebes und/oder des Flachmaterials aus Matrixmaterial stromauf (18) von dem Verschweißungsbereich.

16. Verfahren nach Anspruch 14, **dadurch gekennzeichnet, dass** sich der Verschweißungsbereich über einen Winkel von 45° erstreckt.

17. Verfahren nach Anspruch 14, **dadurch gekennzeichnet, dass** das Vorwärmen des Kerns direkt mittels Infrarot-Heizmitteln durchgeführt wird.

18. Verfahren nach Anspruch 1, **dadurch gekennzeichnet, dass** das Vorwärmen des Kerns in einem Ofen durchgeführt wird.

19. Vorrichtung zur Herstellung eines Verbundmaterials in der Form eines ringförmigen Rohrs durch gleichzeitiges Aufwickeln eines Verstärkungsfasergewebes (12), das ein gewebtes Gefüge aus blanken, mit einem Polymer imprägnierten Fasern aufweist, und eines Flachmaterials aus Matrixmaterial (14), das mindestens das Polymer enthält, auf einen Kern (10), wobei die Vorrichtung einen tragenden Aufbau (30), der ausgestattet ist mit zwei Streben (32, 34), zwischen denen der Kern angebracht ist, Antriebsmittel (36), um den Kern in Drehbewegung anzutreiben, Mittel (130) zur gemeinsamen Befestigung des Verstärkungsfasergewebes und des Flachmaterials aus Matrixmaterial an dem Kern, Mittel zum Spannen (20, 22) dieses Gewebes und dieses Flachmaterials während ihres gleichzeitigen Aufwickelns um den Kern, Mittel zum Erwärmen (16) des so erhaltenen Verbundmaterials, die in einem Verschweißungsbereich des Verstärkungsfasergewebes mit dem Flachmaterial aus Matrixmaterial angeordnet sind, und Mittel zum Kühlen (140, 150, 160) des Kerns durch ein Kühlfluidum aufweist.

20. Vorrichtung nach Anspruch 19, **dadurch gekennzeichnet, dass** die Mittel zum Erwärmen durch eine berührungslose Infrarot-Einrichtung (42) verwirklicht werden.

21. Vorrichtung nach Anspruch 19, **dadurch gekennzeichnet, dass** der Kern über im wesentlichen seine gesamte Länge einen Schlitz (130) aufweist, um die freien Enden des Verstärkungsfasergewebes und des Flachmaterials aus Matrixmaterial aufzunehmen.

22. Vorrichtung nach Anspruch 19, **dadurch gekennzeichnet, dass** die Mittel zum Kühlen durch den Kern durchgelochte Kanäle (140) aufweisen, um das Zirkulieren des Kühlfluidums zu erlauben.

23. Vorrichtung nach Anspruch 19, **dadurch gekennzeichnet, dass** der Kern eine Vorform für das Verbundmaterial darstellt.

24. Vorrichtung nach Anspruch 19, **dadurch gekennzeichnet, dass** die Mittel zum Erwärmen sich in Abhängigkeit vom Anwachsen des Durchmessers des Rohrs aus Verbundmaterial mittels einer pantographischen Konstruktion (50) dergestalt verschieben, dass der Abstand zwischen diesen Mitteln zum Erwärmen und dem Rohr konstant bleibt.

25. Vorrichtung nach Anspruch 19, **dadurch gekennzeichnet, dass** sie außerdem Mittel zum Vorwärmen (18), die stromauf von dem Verschweißungsbereich angeordnet sind, aufweist.

26. Vorrichtung nach Anspruch 19, **dadurch gekennzeichnet, dass** sie außerdem eine Preßeinrichtung, die stromab von dem Verschweißungsbereich angeordnet ist und dazu geeignet ist, den Druck zwischen den aufeinanderfolgenden Lagen des Materials zu verbessern, aufweist.

27. Verbundmaterial von ringförmigem Aufbau, erhalten nach dem Verfahren der Ansprüche 1 bis 18.

28. Verbundmaterial nach Anspruch 27, **dadurch gekennzeichnet, dass** diese Fasern ausgewählt sind unter einer der Fasern der Gruppe, die Fasern aus Kohlenstoff, aus Polyparaphenylenterephthalamid oder "Kevlar", aus Glas, aus Bronze oder aus einem Gemisch dieser Fasern, aufweist.

29. Verbundmaterial nach Anspruch 27, **dadurch gekennzeichnet, dass** das Polymer PTFE oder PCTFE oder irgendein anderes wärmehärtbares Polymer aufweist.

30. Verbundmaterial nach Anspruch 27, **dadurch gekennzeichnet, dass** der Zusatzstoff ausgewählt ist aus einem der Produkte der Gruppe, die Molybdändisulfid, Siliciumcarbid, Graphit, Silber und Blei aufweist.

## Claims

1. A method of manufacturing a composite material in the form of an annular tube, by winding on a mandrel (10) from a reinforcing fiber fabric (12) comprising a woven structure of bare fibers impregnated with a polymer and a sheet of matrix material (14) including at least the polymer, the reinforcing fiber fabric and the sheet of matrix material being available on payout rolls (20, 22), the method comprising the following steps:
1) preheating the mandrel (10) to a predetermined value;
2) fixing the reinforcing fiber fabric (12) and the sheet of matrix material (14) to the mandrel (10);
3) causing the mandrel (10) to rotate at a nominal value to wind the fabric and the sheet simultaneously, the fabric and the sheet being subjected to a nominal tension;
4) actuating heating means for heating the thus obtained composite material (16) and cooling means for cooling the mandrel (140, 150, 160);
5) when the tube reaches the desired diameter, stopping both the heating means and the rotation of the mandrel;
6) after a determined duration that is sufficient for bringing the temperature of the mandrel to the predetermined preheating value, stopping the cooling means; and
7) dismounting the mandrel (10).

2. A method according to claim 1, **characterised in that**, during a determined number of. revolutions of the mandrel, the reinforcing fiber fabric (12) and the sheet of matrix material (14) are subjected to tension lower than their nominal operating tension.

3. A method according to claim 1 or claim 2, **characterised in that** the mandrel (10) constitutes a preform for the composite material.

4. A method according to claim 1, **characterised in that** the reinforcing fiber fabric (12) comprises a woven structure of bare fibers with a polymer added by preimpregnation (24).

5. A method according to claim 4, **characterised in that** the fibers are constituted by one of the fibers taken from the group comprising fibers made of carbon, of polyparaphenyleneterephthalamide or "Kevlar", of glass, of bronze, and of a mixture of such fibers.

6. A method according to claim 4, **characterised in that** the polymer comprises PTFE, or PTFCE, or any other thermosetting polymer.

7. A method according to claim 4, **characterised in that** the sheet of matrix material comprises said polymer plus at least one additive for improving the tribological characteristics of the material.

8. A method according to claim 7, **characterised in that** the additive is constituted by one of the substances taken from the group comprising: molybdenum bisulfide (MoS2), silicon carbon (SiC), graphite, silver, and lead.

9. A method according to claim 1, **characterised in that** the mandrel is rotated at a constant speed lying in the range 0.1 rpm to 0.5 rpm.

10. A method according to claim 1, **characterised in that** the nominal tension of the reinforcing fiber fabric (12) lies in the range 50 N/cm to 200 N/cm.

11. A method according to claim 1, **characterised in that** the nominal tension of the sheet of matrix material (14) lies in the range 1 N/cm to 10 N/cm.

12. A method according to claim 10 or claim 11, **characterised in that** said nominal tensions are obtained by braking rollers (20,22) paying out the reinforcing fiber fabric and the sheet of matrix material.

13. A method according to claim 1, **characterised in that** the mandrel is cooled by air circulation.

14. A method according to claim 1, **characterised in that** the composite material is heated without contact by infrared heating (16) around a welding zone between the reinforcing fabric and the sheet of matrix material.

15. A method according to claim 14, **characterised in that** heating of the composite material is reinforced by prior heating of the reinforcing fiber fabric and/or of the sheet of matrix material upstream (18) from the welding zone.

16. A method according to claim 14, **characterised in that** the welding zone extends over an angle of 45°.

17. A method according to claim 14, **characterised in that** the mandrel is preheated directly using the infrared heating means.

18. A method according to claim 1, **characterised in that** the mandrel is preheated in an oven.

19. A machine for manufacturing a composite material in the form of an annular tube by winding on a mandrel (10) both a reinforcing fiber fabric (12) comprising a woven structure of bare fibers impregnated with a polymer and a sheet of matrix material (14) including at least this polymer, the machine comprising a load-carrying structure (30) provided with two uprights (32, 34) between which the mandrel is placed; driving means (36) for driving the mandrel in rotation; means (130) for combined fixing of the reinforcing fiber fabric and of the sheet of matrix material on the mandrel; tensioning means (20, 22) for tensioning said fabric and sheet while they are being simultaneously wound on the mandrel; heating means (16) for heating the composite material obtained in this way and disposed in a welding zone between the reinforcing fiber fabric and the sheet of matrix material; and cooling means (140, 150, 160) for cooling the mandrel by a cooling fluid.

20. A machine according to claim 19, **characterised in that** the heating means are implemented by a contact-less infrared device (42).

21. A machine according to claim 19, **characterised in that** the mandrel includes a slot (130) extending substantially along its entire length for receiving the free ends of the reinforcing fiber fabric and of the sheet of matrix material.

22. A machine according to claim 19, **characterised in that** the cooling means include channels (140) that are pierced through the mandrel to enable a cooling fluid to circulate.

23. A machine according to claim 19, **characterised in that** the mandrel constitutes a preform for the composite material.

24. A machine according to claim 19, **characterised in that** the heating means are moved as a function of the increasing diameter of the tube of composite material by means of a pantograph assembly (50) so that the distance between the heating means and the tube remains constant.

25. A machine according to claim 19, **characterised in that** it further includes preheating means (18) disposed upstream from the welding zone.

26. A machine according to claim 19, **characterised in that** it further includes a presser device disposed downstream from the welding zone and designed to improve the pressure between the successive strata of the material.

27. A composite material having an annular structure obtained according to the method of claims 1 to 18.

28. A composite material according to claim 27, **characterised in that** the fibers are selected from one of the fibers taken from the group comprising fibers made of carbon, of polyparaphenyleneterephthalamide or "Kevlar", of glass, of bronze, and of a mixture of such fibers.

29. A composite material according to claim 27, **characterised in that** the polymer includes PTFE or PTFCE or any other thermosetting polymer.

30. A composite material according to claim 27, **characterised in that** the additive is selected from one of the substances of the group comprising molybdenum bisulfide, silicon carbide, graphite, silver, and lead.
